# EUROPEAN PATENT APPLICATION

(11) **EP 0 917 359 A1**
(43) Date of publication of application: **19.05.1999**
(21) Application number: 97935835.5
(22) Date of filing: 20.08.1997
(51) Int. Cl.: H04N 5/225

(54) **ELECTRONIC CAMERA WITH LIQUID CRYSTAL DISPLAY**

(30) Priority: 21.08.1996 JP 220163/96
(71) Applicant: Hitachi, Ltd., Chiyoda-ku, Tokyo 101 (JP)
(72) Inventor: KANDA, Naoya, Yokosuka-shi, Kanagawa 239 (JP); KAWAMURA, Kunihito, Kodaira-shi, Tokyo 187 (JP); UMEZAWA, Koichi, Tokyo 187 (JP); NEMOTO, Ryuichi, Hannou-shi, Saitama 357 (JP); AMANO, Yasuo, Yokohama-shi, Kanagawa 244 (JP); ORIHASHI, Ritsuro, Hachimanyamaapartment 422, Yokohama-shi, Kanagawa 244 (JP); KENDO, Kosuke, Yokohama-shi, Kanagawa 244 (JP); YOSHIDA, Isamu, Hitachihachimanyamaapartment 526, Yokohama-shi, Kanagawa 244 (JP); MIYANO, Ichiro, Tokyo 158 (JP); YAMAKURA, Hideo, Yokohama-shi, Kanagawa 245 (JP); OOZEKI, Yoshio, Fujisawa-shi, Kanagawa 251 (JP); ASADA, Toyoki, Yokohama-shi, Kanagawa 244 (JP); UEDA, Kie, Tokyo 154 (JP); KAWAGUCHI, Ikuo, Tokyo 158 (JP); MATSUMOTO, Kunio, Yokohama-shi, Kanagawa 232 (JP)
(74) Representative: Calderbank, Thomas Roger
(86) International application number: JP9702886
(87) International publication number: WO9808337

(57) **Abstract**

An object of the present invention is to provide an electronic camera with a liquid crystal display, which is pocket-sized enough to be put into or out of a pocket, of low power consumption, and vibration-resistant, and, what is more, exhibits a high calculating ability and has a high-speed performance.

The present invention comprises a camera unit 3 photographing an object to be photographed, a circuit including an ADC 78 converting picture signals photographed by the camera unit into digital picture signals, a compression-encoding unit 80 compression-encoding the digital picture signals, a memory 65 storing the compression-encoded picture signals, an expansion-decoding unit 81 expansion-decoding the compression-encoded picture signals stored in the memory, a DAC 83 converting the picture signals expansion-decoded in the expansion-decoding unit into analog signals, and a microcomputer 73 controlling the compression-encoding unit, storage into the memory and the expansion-decoding unit, and a liquid crystal display unit 2 displaying the above-described analog picture signals. To store the picture signals compression-encoded in the compression-encoding unit in the circuit, an IC card which is formed by arranging a plurality of multi-storied flash memories in parallel, is mountable on the rear surface side of the camera opposite to the liquid crystal display unit, thereby to achieve the above-described object.

## Description

### TECHNICAL FIELD

The present invention relates to an electronic camera with a liquid crystal display.

### BACKGROUND ART

A camera with a liquid crystal display, which is constituted so that a picture photographed by the camera is stored in a magnetic storage medium and is displayed on a liquid crystal display screen, has been known as a first prior art.

An electronic still camera, on which a memory card is allowed to be mounted, is known as a second prior art on pages 157 to 171 of NIKKEI ELECTRONICS 1996. 4. 22 (no. 660).

In either of the above-described prior arts, enough consideration has not been given to a point of embodying an electronic camera with a liquid crystal display, which is pocket-sized enough to be able to put it into or out of a pocket, does not consume much power, can resist vibrations, and, exhibits a high calculating cap ability and can be operated at a high-speed.

An object of the present invention, in order to solve the above-mentioned problem, is to provide an electronic camera with a liquid crystal display, which is pocket-sized enough to be put into or out of a pocket, does not consume much power, can resist vibrations, exhibits a high calculating cap ability and can be operated at a high-speed.

Also, another object of the present invention is to provide an electronic camera with a liquid crystal display which is easy to put into or out of a pocket and is easy to hold with one hand.

Also, still another object of the present invention is to provide an electronic camera with a liquid crystal display which allows an editing of a picture to be performed easily.

### DISCLOSURE OF INVENTION

In order to attain the above-described object, the present invention is an electronic camera with a liquid crystal display, which comprises a camera unit for photographing an object to be photographed, a circuit including a picture signal generating unit which has an ADC converting picture signals photographed by the camera unit into digital picture signals, a compression-encoding unit which encodes the digital picture signals converted in the picture signal generating unit, a memory storing the picture signals compression-encoded in the compression-encoding unit, an expansion-decoding unit which decodes the compression-encoded picture signals stored in the memory, a display picture signal generating unit which has a DAC converting the picture signals expansion-decoded in the expansion-decoding unit into analog signals, and a microcomputer controlling the compression-encoding unit, storage into the memory and the expansion-decoding unit, and a liquid crystal display unit for displaying the analog picture signals obtained from the display picture signal generating unit (the DAC and so on) in said circuit, and the electronic camera is constituted so that, in order to store the picture signals compression-encoded in the compression-encoding unit in said circuit, an IC card which is formed by arranging in parallel a plurality of multi-storied flash memories, is mountable in the rear surface side opposite to the liquid crystal display unit.

Also, in the electronic camera with a liquid crystal display in the present invention, the picture is a motion picture.

Also, the present invention is an electronic camera with a liquid crystal display, which comprises a camera unit photographing an object to be photographed, a picture signal generating unit which has an ADC converting picture signals photographed by the camera unit into digital picture signals, a compression-encoding unit compression-encoding the digital picture signals converted in the picture signal generating unit (the ADC and so on), a memory for making the photographed picture signals, which are compression-encoded in the compression-encoding unit, correspond to compression-encoded background picture signals so as to store the photographed picture signals, an expansion-decoding unit which decodes the compression-encoded picture signals and the compression-encoded background picture signals stored in the memory, a picture signal synthesizing unit for synthesizing expansion-decoded partial picture signals towards the background picture signals expansion-decoded in the expansion-decoding unit, a display picture signal generating unit which has a DAC converting the picture signals synthesized in the picture signal synthesizing unit into analog signals, and a microcomputer which controls the compression-encoding unit, the expansion-decoding unit and the picture signal synthesizing unit, and edits and controls the compression-encoded photographed picture signals for making the photographed picture signals correspond to the compression-encoded background picture signals so as to store the photographed picture signals in the memory, and a liquid crystal display unit displaying the analog picture signals obtained from the display picture signal generating unit (the DAC and so on) in said circuit, and the electronic camera is constituted so that, in order to store the picture signals compression-encoded in the compression-encoding unit in the circuit, an IC card, which is formed by arranging in parallel a plurality of multi-storied flash memories, can be mounted on the rear surface side opposite to the liquid crystal display unit.

Also, the present invention is featured in that, in the electronic camera with a liquid crystal display, the background picture is a still picture and the local picture is a motion picture. Also, the present invention is featured in that, in the electronic camera with a liquid crystal display, the camera unit is constituted so that, on the left side when seen from the front surface side provided with the liquid crystal display unit, the camera unit is supported in such a manner that it can move rotationally back and forth. Also, the present invention is featured in that, in the electronic camera with a liquid crystal display, the memory in the circuit is constituted using a multi-storied memory module formed by arranging in parallel a plurality of multi-storied flash memories. Also, the present invention is featured in that, in the electronic camera with a liquid crystal display, a mode for causing the liquid crystal display unit to display the analog picture signals is performed using a software key board. Also, in the electronic camera with a liquid crystal display in the present invention, the circuit is packaged in two sheets of substrates or one sheet of substrate.

Also, the present invention provides an electronic camera with a liquid crystal display, which has a main body casing, a camera unit which is constituted so that, on the left side when seen from the front surface side with reference to the main body casing, the camera unit is supported rotationally back and forth so as to photograph an object to be photographed, a picture signal generating unit which has an ADC converting picture signals photographed by the camera unit into digital picture signals, an compression-encoding unit compression-encoding the digital picture signals converted in the picture signal generating unit (the ADC and so on), a memory storing the picture signals compression-encoded in the compression-encoding unit, a expansion-decoding unit expansion-decoding the compression-encoded picture signals stored in the memory, a display picture signal generating unit which has a DAC for converting the picture signals expansion-decoded in the expansion-decoding unit into analog signals, and a microcomputer controlling the compression-encoding unit, storage into the memory and the expansion-decoding unit and is built in the main body casing, and a liquid crystal display unit built on the front surface side with reference to the main body casing so as to display the analog picture signals obtained from the display picture signal generating unit (the DAC and so on) in said circuit, and the electronic camera is constituted so that, in order to store the picture signals compression-encoded in the compression-encoding unit in said circuit, an IC card which is formed by arranging in parallel a plurality of multi-storied flash memories, is mountable in the rear surface side which is opposite to the liquid crystal display unit with reference to the main body casing.

Also, the present invention provides an electronic camera with a liquid crystal display, which comprises a main body casing, a camera unit which is constituted so that, on the left side when seen from the front surface side with reference to the main body casing, the camera unit is supported rotatably back and forth so as to photograph an object to be photographed, a picture signal generating unit which has an ADC converting picture signals photographed by the camera unit into digital picture signals, a compression-encoding unit compression-encoding the digital picture signals converted in the picture signal generating unit (the ADC and so on), a memory making the photographed picture signals, which are compression-encoded in the compression-encoding unit, correspond to encoded background picture signals so as to store the photographed picture signals, an expansion-decoding unit expansion-decoding the compression-encoded picture signals and the compression-encoded background picture signals stored in the memory, a picture signal synthesizing unit synthesizing expansion-decoded partial picture signals towards the background picture signals expansion-decoded in the expansion-decoding unit, a display picture signal generating unit which has a DAC converting the picture signals synthesized in the picture signal synthesizing unit into analog signals, and a microcomputer which controls the compression-encoding unit, the expansion-decoding unit and the picture signal synthesizing unit, and edits and controls the compression-encoded photographed picture signals for making the photographed picture signals correspond to the compression-encoded background picture signals so as to store the photographed picture signals in the memory, and a liquid crystal display unit built in the front surface side with reference to the main body casing so as to display the analog picture signals obtained from the display picture signal generating unit (the DAC and so on) in the circuit, and the electronic camera is constituted so that, in order to store the picture signals compression-encoded in the compression-encoding unit in the circuit, an IC card, which is formed by arranging in parallel a plurality of multi-storied flash memories, can be mounted on the rear surface side which is opposite to the liquid crystal display unit with reference to the main body casing.

Also, in the electronic camera with a liquid crystal display in the present invention, a rear surface of the main body casing is formed in a waveform configuration in right and left directions. Also, in the electronic camera with a liquid crystal display in the present invention, a slide lens cap for protecting a lens in the camera unit is provided on an upper surface of the main body casing. Also, in the electronic camera with a liquid crystal display in the present invention, a power supply switch, a camera-recording button and a voice-recording switch are provided on the upper surface of the main body casing. Also, in the electronic camera with a liquid crystal display in the present invention, the circuit is built in two sheets of substrates or one sheet of substrate. Also, in the electronic camera with a liquid crystal display in the present invention, the IC card is constituted so that it can be mounted from the upper surface side of the main body casing. Also, in the electronic camera with a liquid crystal display in the present invention, the display unit is 3. 2 to 4 inches in size.

Also, in the present invention, a background picture and a partial picture are differentiated from each other so as to be stored in the memory, and, using the background picture and the partial picture stored in the memory, an output is performed with the partial picture integrated into or onto the background picture.

As described above, the above-mentioned constitution makes it possible to embody the electronic camera with a liquid crystal display, which is pocket-sized enough to be put into or out of a pocket, does not consume much power, is vibration-resistant, and, what is more, exhibits a high calculating cap ability and has a high-speed performance.

Also, the above-mentioned constitution makes it possible to embody the electronic camera with a liquid crystal display which is easy to put into or out of a pocket and is easy to hold with one hand.

Also, the above-mentioned constitution makes it possible to embody the electronic camera with a liquid crystal display which allows an editing of a picture to be performed easily.

### BRIEF DESCRIPTION OF DRAWINGS

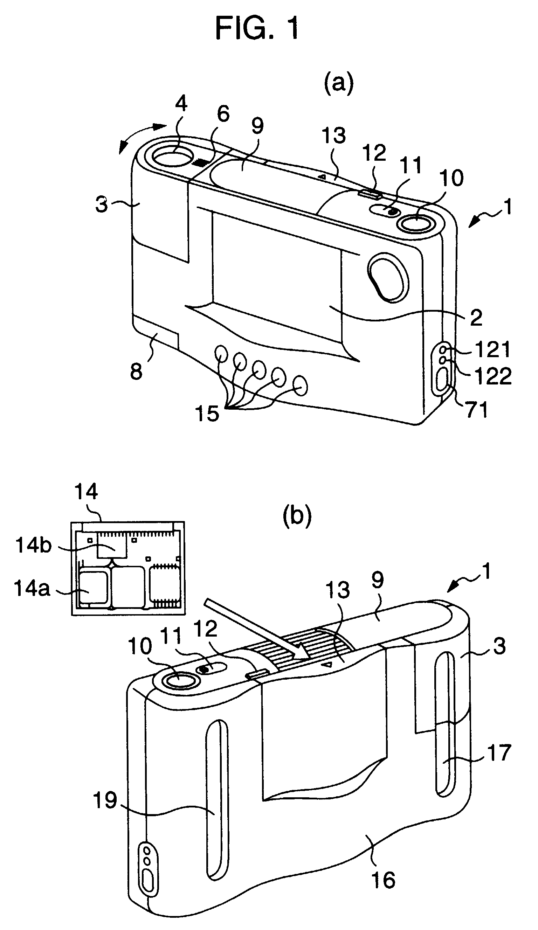

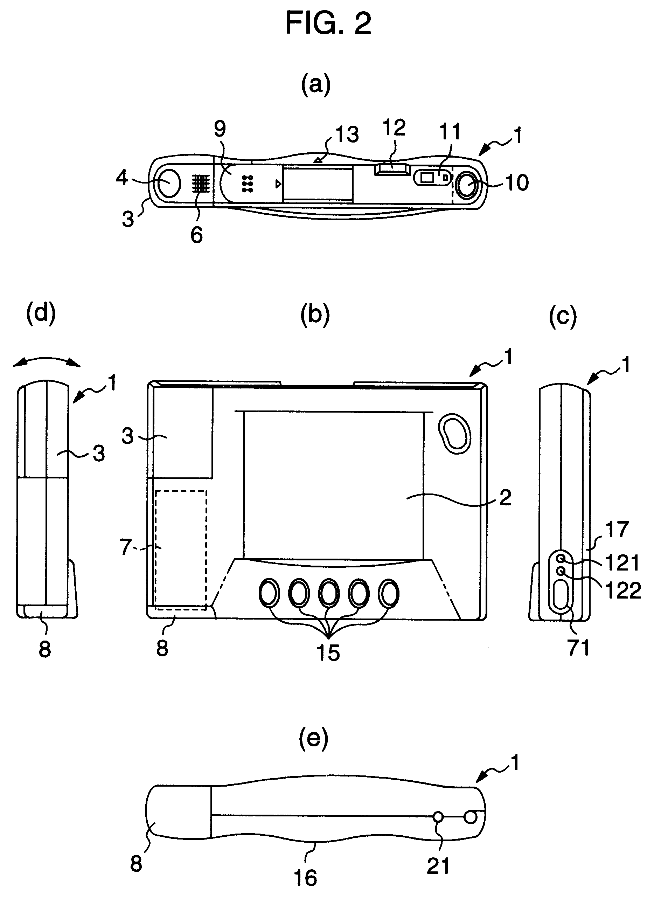

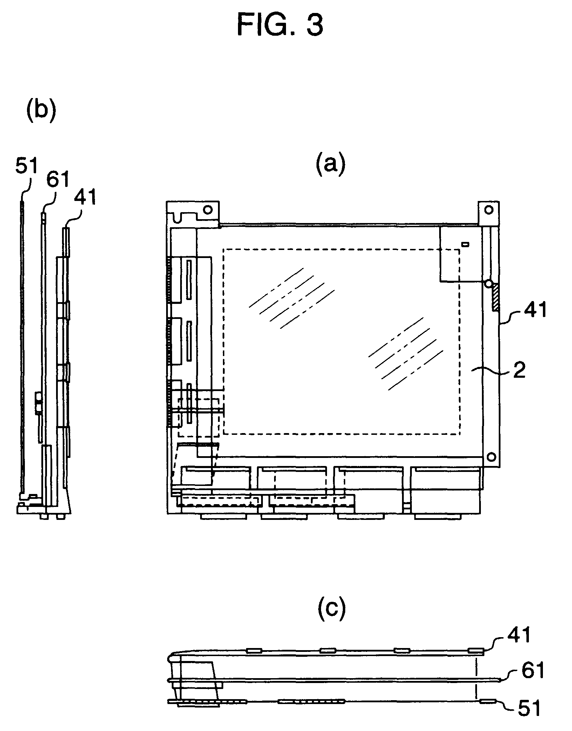

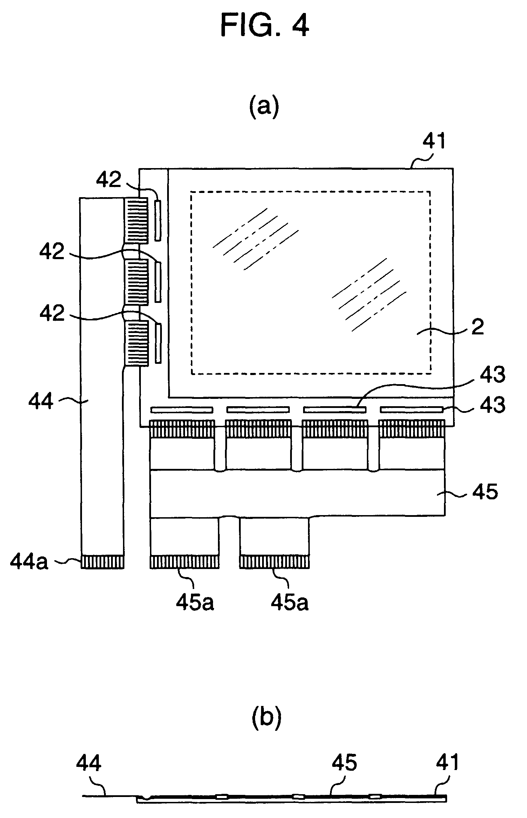

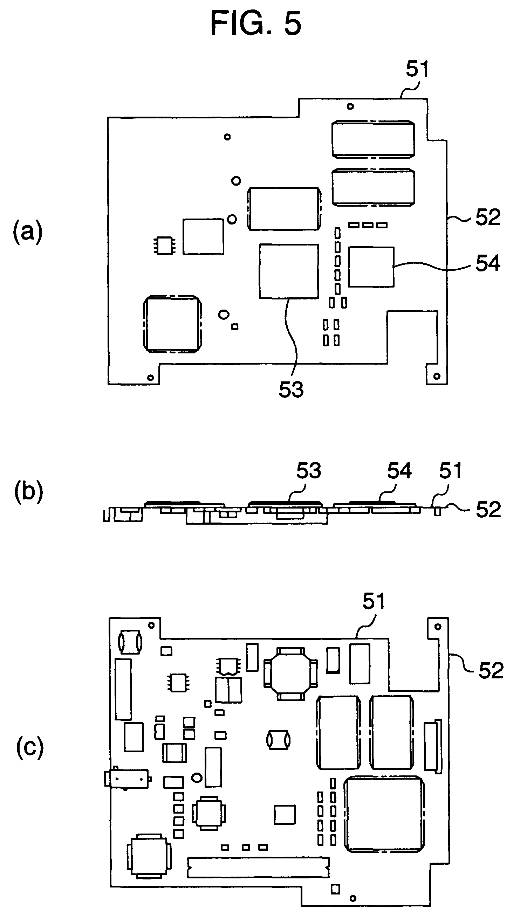

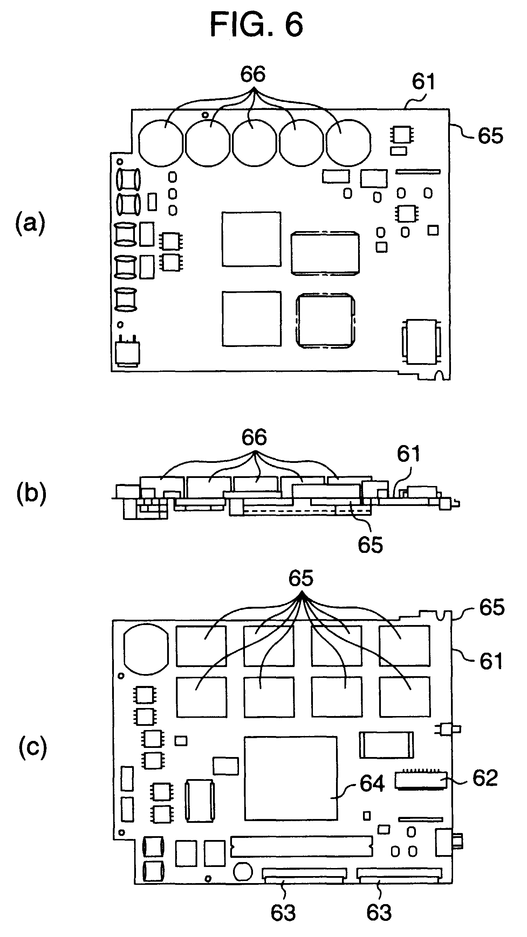

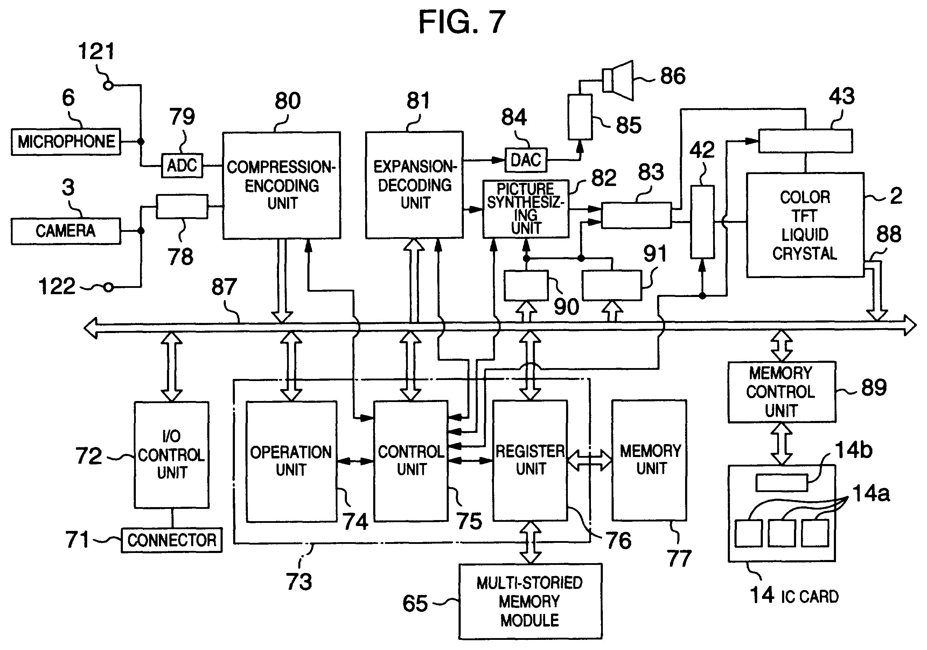

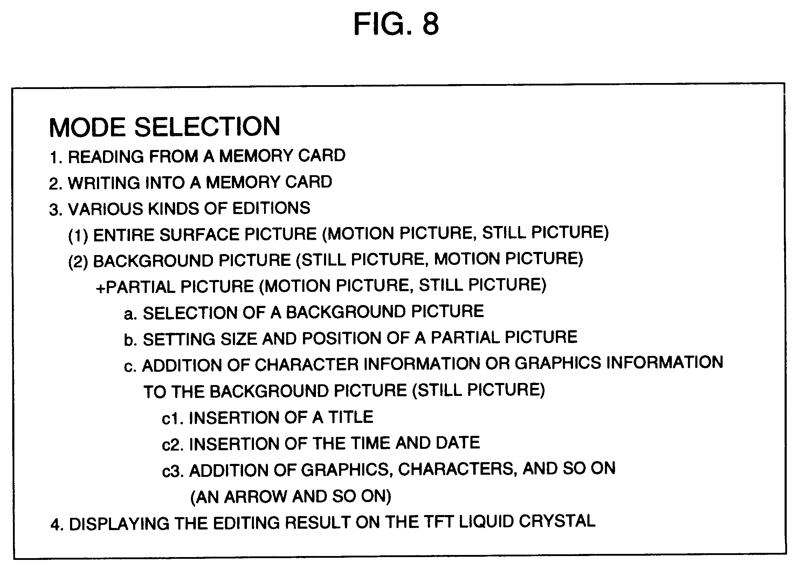

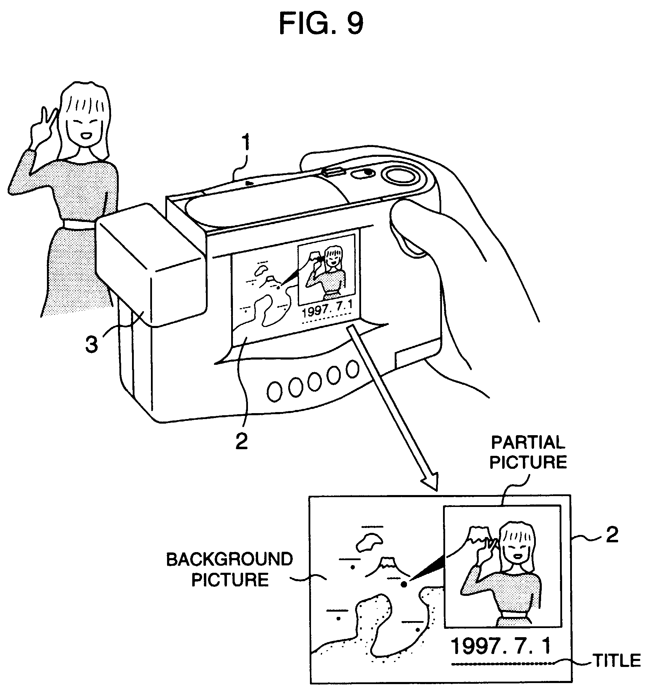

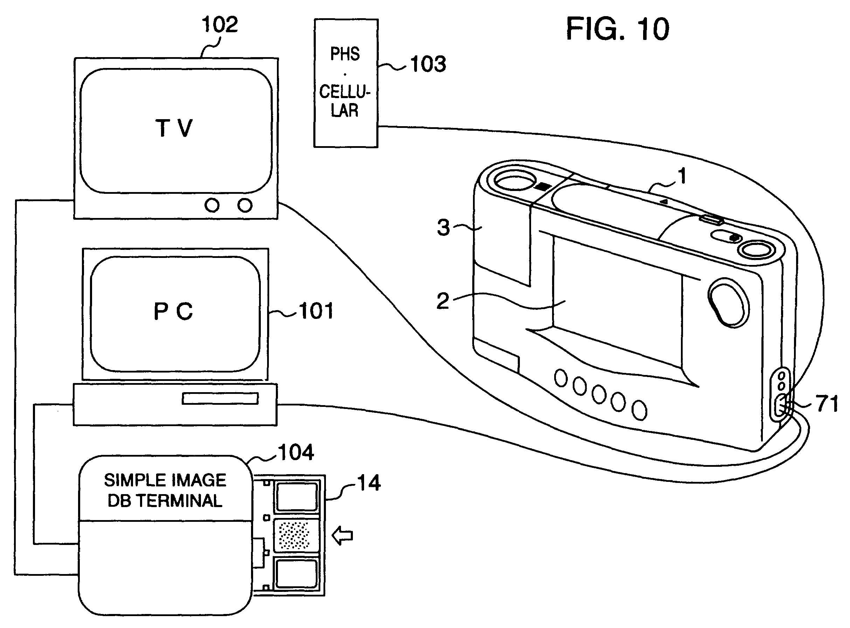

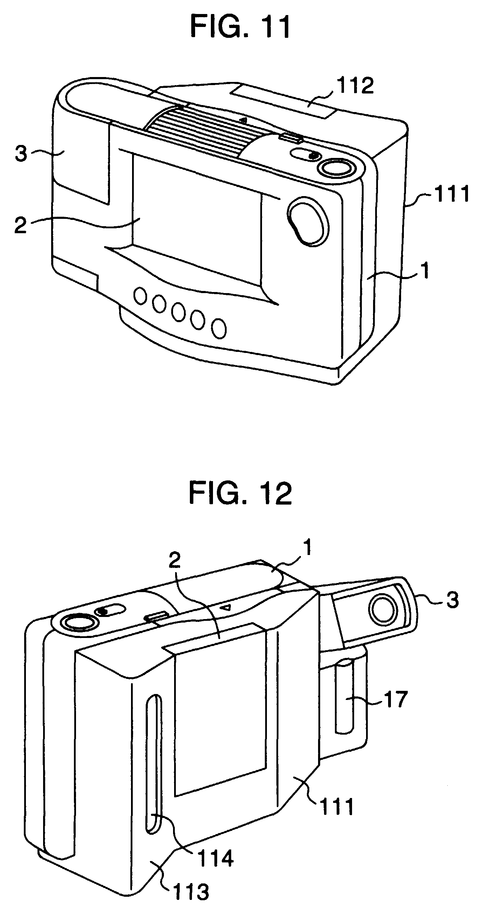

FIG. 1 is perspective views for showing an outside appearance of an embodiment of an electronic camera with a liquid crystal display related with the present invention. FIG. 2 is diagrams showing an outside appearance of the embodiment of the electronic camera with a liquid crystal display related with the present invention. FIG. 3 is diagrams showing an embodiment of internal constitution of the electronic camera with a liquid crystal display related with the present invention. FIG. 4 is diagrams showing an embodiment of a color TFT liquid crystal module related with the present invention, to which exploded flexible print wiring is connected. FIG. 5 is diagrams showing an embodiment of a first wiring substrate packaging structure provided inside the electronic camera with a liquid crystal display related with the present invention. FIG. 6 is diagrams showing an embodiment of a second wiring substrate packaging structure provided inside the electronic camera with a liquid crystal display related with the present invention. FIG. 7 is a diagram for showing an embodiment of circuit constitution of the electronic camera with a liquid crystal display related with the present invention. FIG. 8 is a diagram for showing a picture displayed on TFT liquid crystal, which performs mode selection in the electronic camera with a liquid crystal display related with the present invention. FIG. 9 is a diagram for showing a picture displayed on the TFT liquid crystal, which is edited in the electronic camera with a liquid crystal display related with the present invention. FIG. 10 is a diagram for showing an embodiment of system constitution in which the electronic camera with a liquid crystal display related with the present invention is employed. FIG. 11 is a perspective view seen from the front surface side (the side of a liquid crystal panel), which shows an embodiment in the case of mounting, on an adapter, the electronic camera with a liquid crystal display related with the present invention. FIG. 12 is a perspective view seen from the rear surface side, which shows the embodiment in the case of mounting, on an adapter, the electronic camera with a liquid crystal display related with the present invention.

### BEST MODE FOR CARRYING OUT THE INVENTION

Using the accompanying drawings, the description will be given concerning an electronic camera with a liquid crystal display related with the present invention.

FIG. 1 is a perspective view for showing an outward appearance of an embodiment of the electronic camera with a liquid crystal display related with the present invention. FIG. 1(a) is a perspective view seen from the front surface side (the side of a liquid crystal panel), and FIG. 1(b), which is a perspective view seen from the rear surface side, also illustrates an IC card (CF (Compact Flash) card) to be mounted. FIG. 2 is a diagram for showing an outside appearance of the embodiment of the electronic camera with a liquid crystal display related with the present invention. FIG. 2(a) is an upper elevation view seen from the upper side, FIG. 2(b) is a front elevation view seen from the front surface side (the side of the liquid crystal panel), FIG. 2(c) is a right side elevation view, FIG. 2(d) is a left side elevation view, and FIG. 2(e) is a lower elevation view seen from the lower side.

Reference numeral 1 denotes the electronic camera with a liquid crystal display related with the present invention. The electronic camera with a liquid crystal display 1 has a whole size of about 90 mm long by about 114 mm wide by about 21 mm thick including a waveform configuration formed on the rear surface side. Numeral 2 denotes a color TFT liquid crystal panel which is 3.2 to 4 inches in size. Numeral 3 denotes a camera unit comprising a lens system 4, a light receiving element 5 and a microphone 6. As shown in FIG. 2(d), a lower side of the camera unit is supported by and installed on an axis in such a manner that the camera unit can move rotationally back and forth with the supporting axis as a fulcrum. Incidentally, the camera unit 3 is constituted so that, when it moves rotationally back and forth with the axis as a fulcrum, the supporting axis can be slided slightly in an upward direction. Moreover, the camera unit 3 is constituted so that a battery 7 is housed on the lower side thereof. Numeral 8 denotes a battery lid. Numeral 9 denotes a slide lens cap the ruggedness of which is specially considered, and the slide lens cap is constituted so that it can be slided slightly in a right-and-left direction in FIG. 2(a). Also, numeral 10 denotes a camera-recording button. Numeral 11 denotes a power supply switch. Numeral 12 denotes a voice-recording switch. Numeral 13 denotes an IC card lid which covers an IC card 14 at the time when the IC card 14 is mounted from the upper side, and the IC card lid is constituted so that it can be opened and closed with the lower terminal as a fulcrum in a direction designated by ∇. A headphone 86 for outputting a voice is connected to a connector 21.

The IC card (CF (Compact Flash) card) 14 has outward appearance dimensions of about 36.4 × 42.8 × 3.3 mm. Flash memory chips having, for example, 16Mb, 32Mb are multi-storied in, for example, 4 stages, 6 stages and 8 stages, thereby fabricating a device 14a. Moreover, three or four devices 14a are arranged in parallel and are provided with a read/write controlling LSI 14b, and then are sealed with a resin, thus constituting the IC card. The storage capacity thereof becomes equal to 36 MB to 128 MB. Numeral 15 denotes operation switches which comprise operations such as reproducing play, fast-forward, rewinding, pause, halt, mode selection including an editing mode, and IC card write/read. These operation switches may be embodied by operations on the liquid crystal panel, i.e. a software key board. In order to enhance operability as a portable appliance, the waveform configuration is formed on the rear surface side (a rear surface side when seen from an operator) 16. A belt-shaped member 17, which is soft and feels good to the touch, is embedded in right and left edge line portions. In this way, forming the rear surface side 16 into the waveform configuration makes it easier to put the electronic camera into or out of a pocket and makes it easier to hold the electronic camera with one hand. Also, embedding the soft belt-shaped member 17 makes it even easier to hold the electronic camera with one hand.

The color TFT liquid crystal panel 2, when the screen size is 3.2 inches, becomes about 48.768 mm longitudinal and about 65.024 mm transverse. Size of 1 dot becomes 0.2032 mm longitudinal, and 0.2032 mm transverse when composed of R, G, and B. The whole screen has a size of 240 dots longitudinal by 320 dots transverse. Also, a single character is displayed using 16 dots longitudinal and 12 dots transverse. The single character has a size of 3.2512 mm longitudinal by 2.4384 mm transverse. Accordingly, concerning the whole screen, it becomes possible to display characters 15 lines longitudinal by 20 lines transverse.

FIG. 3 is diagrams showing an embodiment of internal constitution of the electronic camera with a liquid crystal display related with the present invention, where FIG. 3(a) is a front elevation view seen from the side of the liquid crystal panel (the front surface side), FIG. 3(b) is a left side elevation view thereof, and FIG. 3(c) is a lower side elevation view thereof. FIG. 4 is diagrams showing an embodiment of a color TFT liquid crystal module 41 to which exploded flexible print wiring is connected, where FIG. 4(a) is a front elevation view seen from the side of the liquid crystal panel (the front surface side), and FIG. 4(b) is a lower side elevation view thereof. FIG. 5 is diagrams showing an embodiment of a first wiring substrate packaging structure 51 on which devices such as LSIs located on the rear surface side of the inside are packaged, where FIG. 5(a) is a diagram for showing a rear surface side of the first wiring substrate packaging structure 51 on which the LSIs such as a LSI for MPEG (Moving picture coding Experts Group) and a LSI for CODEC are on board (packaged), FIG. 5(b) is a side elevation view thereof, and FIG. 5(c) is a diagram for showing a front surface side of the above-mentioned first wiring substrate packaging structure 51. FIG. 6 is a diagram for showing an embodiment of a second wiring substrate packaging structure 61, which packages devices such as LSIs and is installed between the color TFT liquid crystal module 41 and the first wiring substrate packaging structure 51. FIG. 6(a) is a diagram for showing a rear surface side of the second wiring substrate packaging structure 61, on which the LSIs such as a microcomputer, a multi-storied memory module, a transformer for a DC-DC converter, and a connector to which the flexible wiring for the color TFT liquid crystal module 41 is connected are on board (packaged). FIG. 6(b) is a side elevation view thereof, and FIG. 6(c) is a diagram for showing a front surface side of the above-mentioned second wiring substrate packaging structure 61.

As shown in FIG. 4, the color TFT liquid crystal module 41 comprises a color TFT liquid crystal 2, gate-side driver LSI chips 42 implemented on the liquid crystal substrate, drain-side driver LSI chips 43 packaged on the liquid crystal substrate, gate-side flexible print wiring 44 connected to the gate-side driver LSI chips 42, and drain-side flexible print wiring 45 connected to the drain-side driver LSI chips 43. Reference numeral 44a denotes a terminal of the gate-side flexible print wiring connected to a connector 62 packaged on the second wiring substrate packaging structure 61. Reference numeral 45a denotes a terminal of the drain-side flexible print wiring connected to a connector 63 packaged on the second wiring substrate packaging structure 61. In FIG. 4, both the gate-side flexible print wiring 44 and the drain-side flexible print wiring 45 are illustrated in a state of being exploded.

As shown in FIG. 5, the first wiring substrate packaging structure 51 comprises a first wiring substrate 52 and LSIs implemented on the first wiring substrate 52, such as a LSI 53 for MPEG (Moving Picture coding Experts Group) (for digital signal processing) and a LSI 54 for CODEC. A LSI for JPEG (Joint Photographic coding Experts Group) may be on board on the first wiring substrate packaging structure 51. Also, the LSI 53 for MPEG and the LSI 54 for CODEC may be constituted with a single LSI. Operation of the camera-recording button 10 allows the following to be performed: Image signals photographed by the light receiving element in the camera unit 3 are fetched with a predetermined sampling period, and luminance signals and color difference signals are extracted from the fetched image signals. Then, these extracted luminance signals and color difference signals are each converted into digital signals by an A/D conversion circuit, then being stored in sequence for each picture into a frame memory. An encoder (encoder) for video in the LSI 53 for MPEG and the LSI 54 for CODEC, towards the digital picture signals accumulated in sequence in the frame memory, performs a compression processing based on an intra-picture (space-related) correlation relationship (DCT: discrete cosine transformation) (space-related (intra-picture) information compression processing : The transformation into frequency region is carried out so as to cut components with less amount of information.). Values after the DCT operation are divided by a certain numerical value (QSTEP = quantization width) by a quantizer (Q), thereby performing a quantization processing. Then, concerning the luminance signals, an inversion quantizer and an inversion DCT unit restore the compression processing based on the intra-picture correlation relationship. The restored picture signals are compared with the picture signals accumulated in sequence in the above-described frame memory so as to detect motion vectors (portions in which a motion occurs), thus performing a compression processing based on an inter-picture (time-related) correlation relationship (time-related (inter-picture) information compression processing : Only information on time difference amount is extracted.) Towards these compression-processed, a compression processing based on deviations in occurrence probability of the code (entropy encoding or length-variable encoding) (statistical information compression processing : A short code is assigned to data with high occurrence frequency, and a long code is assigned to data with low occurrence frequency.) is performed, then causing a multi-storied memory module 65 to store the compression-processed in accordance with the addresses. The multi-storied memory module 65, as shown in FIG. 6(c), is constituted by arranging in parallel, for example, 2 × 4 units of flash memory chips, one unit of which is obtained by stacking the flash memory chips in about 4 to 8 stages. This circumstance allows the compression-processed information (data) to be written (stored) in a state parallel or quasi-parallel to each flash memory chip, thereby making a high-speed writing possible. An encoder (encoder) for audio in the LSI 53 for MPEG and the LSI 54 for CODEC, towards digital voice signals converted by an ADC 79, performs a frequency region information compression processing (It cuts components except for those sensitive to human ears.), and further performs a time region information compression processing (It extracts only time difference amount.), and still further performs a statistical information compression processing (A short code is assigned to data with high occurrence frequency, and a long code is assigned to data with low occurrence frequency.) so as to carry out the encoding, then causing the multi-storied memory module 65 to store the codes. This writing into the multi-storied memory module 65 is executed in a state parallel or quasi-parallel to each flash memory chip, thus embodying a high-speed writing.

A decoder (decoder) for video in the LSI 53 for MPEG and the LSI 54 for CODEC performs entropy decoding concerning the information compression for each picture (the compressed luminance signals and the compressed color difference signals) stored in the multi-storied memory module 65. Regarding this, the inversion quantization unit and the inversion DCT unit perform an inversion quantization processing and an inversion DCT processing. Then, a reproduced digital picture is created by motion vectors based on the above-mentioned information compression, then being stored in the frame memory. In this way, when displaying only motion pictures on the color TFT liquid crystal 2, the decoded pictures stored in the frame memory are converted into analog picture signals by a D/A converter, then being outputted to the gate-side driver LSI chips 42 and the drain-side driver LSI chips 43. A decoder (decoder) for audio in the LSI 53 for MPEC and the LSI 54 for CODEC performs decoding in a like manner with the video decoding. Conversion into analog voice signals is carried out by a DAC 84, and the analog voice signals are outputted from a headphone 86 through an amplifier 85.

As shown in FIG. 6, the second wiring substrate packaging structure 61 comprises a second wiring substrate 65 and a LSI 64 such as a microcomputer packaged on the second wiring substrate 65, the multi-storied memory module 65, a transformer 66 for a DC-DC converter, connectors 62, 63 to which flexible wirings 44, 45 for the color TFT liquid crystal module 41 are connected, and so on. The multi-storied memory module 65, as shown in FIG. 6(c), is constituted by arranging in parallel, for example, 2 × 4 units of flash memory chips, one unit of which is formed by stacking about 4 to 8 flash memory chips, on the second wiring substrate 65. The LSI 64 such as a microcomputer, which comprises an operation unit 74, a control unit 75 and a register unit 76, controls, through a bus line 87, the multi-storied memory module 65, a memory control unit 89 connected to the mounted IC card 14, the LSI 53 for MPEC and the LSI 54 for CODEC, the gate-side driver LSI chips 42 and the drain-side driver LSI chips 43, and so on.

As described above, the constitution based on the first and the second wiring substrate packaging structures 51, 61 makes it possible to embody the electronic camera with a liquid crystal display 1 as a thin type.

Next, using FIG. 7, the description will be given concerning an embodiment of a processing circuit of the electronic camera with a liquid crystal display 1. A microcomputer 73 comprises an operation unit 74, a control unit 75, and a register unit 76 which stores processing programs and performs writing into or reading out of a memory unit 77 and the multi-storied memory module (It is formed with, for example, flashes.) 65 through a bus. The control unit 75 controls the operation unit 74, the register unit 76, an encoding unit 80, a decoding unit 81, a picture synthesizing unit 82, a memory control unit 89 connected to the gate-side driver LSI chips 42, the drain-side driver LSI chips 43 and the mounted IC card 14, and so on. Reference numeral 78 denotes a picture signal generating unit which has an ADC (A/D converter) for performing an A/D conversion concerning the image signals (They include luminance signals and color difference signals) photographed by a photographing element in the camera unit 3. Reference numeral 79 denotes an ADC (A/D converter) for performing an A/D conversion of a voice obtained by a microphone 6. Reference numeral 80 denotes an encoding unit for compression-encoding the digital picture signals and the digital voice signals. The compression-encoding unit, towards the picture signals accumulated in sequence in the frame memory, performs the compression processing based on an intra-picture (space-related) correlation relationship (DCT: discrete cosine transformation). Values after the DCT operation are divided by a certain numerical value (QSTEP = quantization width) by the quantizer (Q), thereby performing the quantization processing. Then, concerning the luminance signals, the inversion quantizer and the inversion DCT unit restore the compression processing based on an intra-picture correlation relationship. The restored picture signals are compared with the picture signals accumulated in sequence in the above-described frame memory so as to detect the motion vectors (portions in which a motion occurs), thus performing the compression processing based on an inter-picture (time-related) correlation relationship. Towards these compression-processed, the compression processing based on deviations in occurrence probability of the code (the entropy encoding or the length-variable encoding) is performed. In addition, regarding the voice, the compression-encoding unit, towards the digital voice signals converted by the ADC 79, performs the frequency region information compression processing, further performs the time region information compression processing, and still further performs the statistical information compression processing so as to carry out the encoding, then transmitting the codes to the bus line 87. Reference numeral 81 denotes an expansion-decoding unit for which decodes the compression-encoded digital picture signals and the compression-encoded digital voice signals received from the bus line 87. The expansion-decoding unit performs the entropy decoding concerning the information compression for each picture on the video (the compressed luminance signals and the compressed color difference signals) accumulated in sequence in the frame memory. Regarding this, the inversion quantization unit and the inversion DCT unit perform the inversion quantization processing and the inversion DCT processing. Then, the reproduced digital picture is created by the motion vectors based on the above-mentioned information compression, then being stored in the frame memory. In addition, regarding the information compression on the audio, too, the expansion-decoding unit carries out the decoding in a similar manner with the video decoding. Reference numeral 82 denotes a picture synthesizing unit which, from motion pictures photographed by the camera unit 3 and outputted to the frame memory in the expansion-decoding unit 81, selects a motion picture in accordance with a policy of the editing, and synthesizes it or not with another picture such as a background picture. The picture synthesizing unit outputs a motion picture just the way it is, which is photographed by the camera unit 3 and is outputted to the frame memory in the expansion-decoding unit 81. Otherwise, the picture synthesizing unit picks up a motion picture, which is photographed by the camera unit 3 and outputted to the frame memory in the expansion-decoding unit 81, and reduces it into a desired size, and fits the reduced picture into a desired position on a background picture (for example, a still picture) received from the bus line 87, and then outputs the synthesized picture, supplying it with character information on the time and date obtained from a timer built in the microcomputer 73, character information such as the title or the other information on a relation between the background picture and the motion picture (graphics information such as arrow or character information). Reference numeral 83 denotes a display picture signal generating unit that has a DAC (D/A converter) which performs a D/A conversion for reproducing the image signals to be displayed on the color TFT liquid crystal 2. Reference numeral 91 denotes an interface unit for causing the color TFT liquid crystal 2 to display a menu screen on operations such as mode selection and icons so as to input various kinds of data. Reference numeral 84 denotes a DAC which converts the decoded voice digital signals into the voice analog signals. Reference numeral 85 denotes an amplifier which amplifies the voice analog signals so as to output it to the headphone 86. Reference numeral 88 denotes information obtained by a software key board. Reference numeral 89 denotes a memory control unit, which is to be connected to the mounted IC card 14 and is connected to the bus line 87. Namely, the memory control unit 89 plays a role of connecting the mounted IC card 14 with the bus line 87. Reference numeral 90 denotes an expansion-decoding unit which decodes a still picture as a background picture. The expansion-decoding unit is connected to the bus line 87 and inputs an output into the picture synthesizing unit 82 and the display picture signal generating unit 83.

First, multimedia information which the electronic camera with a liquid crystal display 1 processes is coded information such as characters (for example, a title, a message and so on), a synthesized sound and graphics, and natural information such as a voice obtained from a microphone 9 provided in the camera unit 3, a still picture (as a background picture, for example, a tour guide, a map, a newspaper clipping and so on) and a motion picture photographed by the camera unit 3. The coded information such as characters (for example, a title, a message and so on), a synthesized sound and graphics and, of the natural information, the still picture (as a background picture, for example, a tour guide, a map, a newspaper clipping and so on) is created, for example, using an apparatus such as a personal computer or a workstation, and is inputted from an I/O control unit 72 through a connector 71, and then is stored in a memory unit 77 through the register unit 76 constituting the microcomputer 73. In particular, the still picture which becomes a background picture is compression-encoded, inputted, and stored in the memory unit 77. This makes it possible to reduce memory capacities for the memory unit 77, the multi-storied memory module 65 and the IC card 14. Incidentally, it is allowable that this compression-encoding is carried out using the compression-encoding unit 80, then making the memory unit 77 perform the storage through the register unit 76.

Next, the description will be given concerning recording of pictures, i.e. fetching of motion pictures photographed by the camera unit 3. First, the power supply switch 11 is switched ON. When inputting a voice, the voice-recording switch 12 is switched ON. Then, opening the slide lens cap 9 which covers the lens 4 in the camera unit 3 and tilting the camera unit 3 onto the rear surface side to direct it towards an object to be photographed, the camera-recording button 10 is operated (pushed). This allows the photographing element in the camera unit 3 to photograph the object to be photographed and to output the image signals composed of sequential motion pictures. The outputted image signals (They include luminance signals and color difference signals.) undergo an A/D conversion in the picture signal generating unit 78, and are compression-encoded as the motion pictures by the compression-encoding unit 80, and are transmitted to the bus line 87, then being accumulated at a high speed into the multi-storied memory module 65 through the register unit 76 in the microcomputer 73.

Additionally, when the electronic camera with a liquid crystal display 1 is used as a picturephone and an object to be photographed is the operator and so on, it is necessary to tilt the camera unit 3 onto the front surface side to direct it towards the object to be photographed.

Next, the description will be given of various kinds of editions at the time of reproducing. First, the power supply switch 11 is switched ON. Operating the software key board allows the microcomputer 73 to read a menu screen stored in the memory unit 77 and to display it on the color TFT liquid crystal 2 through the interface unit 91. By operating a mode selection switch 15f, various kinds of modes stored in the memory unit 76 are read out, and, as shown in FIG, 8, are displayed on a screen of the TFT (Thin Film Transistor) liquid crystal 2. Of the various kinds of modes, "3. Various kinds of editing modes" is designated, and further either of "(1) entire surface picture (motion picture, still picture)" and "(2) background picture (still picture, motion picture) + partial picture (motion picture, still picture)" is selected. This selection result 88 is transmitted to the microcomputer 73. When "(1) entire surface picture (motion picture, still picture)" is selected and a reproducing play operation switch 15 is operated, the microcomputer 73 reads in sequence the compression-encoded motion pictures stored in sequence in the multi-storied memory module 65, allows the expansion-decoding unit 81 to expansion-decode them, causes the frame memory to store them, and controls the picture synthesizing unit 82 so that the digital pictures (motion pictures), which are outputted to and are stored in the frame memory in the expansion-decoding unit 81, are outputted just the way they are. Accordingly, it turns out that the motion picture itself of the object to be photographed, which is photographed by the camera unit 3, is displayed on the screen of the color TFT liquid crystal 2. Also, the operation switch 15 contains fast-forward, rewinding, pause, and halt. Operating them allows the fast-forward, the rewinding, the pause, or the halt to be executed.

Also, when "(2) background picture (still picture, motion picture) + partial picture (motion picture, still picture)" is selected, "a. Selection of a background picture" is designated first. These pieces of information 88 are transmitted to the microcomputer 73. The control unit 75 reads in sequence various kinds of background pictures (still pictures) stored in the memory unit 77, causes the expansion-decoding unit 90 to expand them, and displays them on the screen of the TFT liquid crystal 2 through the display picture signal generating unit 83. By operating the software key board, a desired background picture is designated and signals for this designated desired background picture are sent to the microcomputer 73. Incidentally, if the various kinds of background pictures are supplied with codes and the operator can select a background picture at seeing the codes, instead of displaying the various kinds of background pictures on the screen of the TFT liquid crystal 2, displaying of the codes on the screen of the TFT liquid crystal 2 makes it possible to designate a desired background picture and to send the signals for the designated desired background picture to the microcomputer 73. FIG. 9 shows a case where, when making a tour album, a still picture composed of a map of the destination of a tour to be photographed by the camera unit 3 or a tour guide thereto, is selected as the background picture. Next, "b. Setting size and position (frame) of a partial picture" is designated. Size and position, in and at which a partial picture (motion picture) photographed by the camera unit 3 is inset (inserted) into the desired background picture (in FIG. 9, the still picture composed of a map of the destination of the tour) displayed on the screen of the TFT liquid crystal 2, are set, and these piece of set information are transmitted to the microcomputer 73. Additionally, "b. Setting size and position (frame) of a partial picture" becomes unnecessary when the size and the position, in and at which the partial picture (motion picture) photographed by the camera unit 3 is inset (inserted) into the desired background picture, are specified. However, the microcomputer 73 is required to obtain information on the size and the position in and at which the partial picture (motion picture) photographed by the camera unit 3 is inset (inserted) into the desired background picture. Also, operating of the camera-recording button 10 makes it possible to obtain, from the timer built in the microcomputer 73, the time and date when the object has been photographed by the camera unit 3. Also, operating of the software key board makes it possible to input and store, into the memory unit 77 through the register unit 76, character information or graphics information on the title, a relation between the background picture and the partial picture and so on.

As described above, the microcomputer 73 is able to obtain the selected desired background picture (compression-encoded still picture), the setting information on size and position of the partial picture (compression-encoded motion picture) towards the desired background picture (compression-encoded still picture), and the character information or the graphics information which is inserted into the background picture and related with the title, a relation between the background picture and the partial picture and so on. Accordingly, the microcomputer, in the operation unit 74, reads the desired background picture (compression-encoded still picture) from the memory unit 77, and reads the partial picture (compression-encoded motion picture) from the multi-storied memory module 65, and then edits the desired background picture and the partial picture which are supplied with the setting information on size and position of the partial picture (compression-encoded motion picture) towards the desired background picture (compression-encoded still picture) and the character information or the graphics information which is inserted into the background picture and related with the title, a relation between the background picture and the partial picture and so on, thus writing the edited desired background picture and the partial picture into the multi-storied memory module 65 through the register unit 76. This makes it possible for the multi-storied memory module 65 to store the desired background picture and the partial picture in a state in which they are compression-encoded, and are supplied with the setting information and the character information or the graphics information, and thus are permitted to correspond with each other.

Next, the description will be given concerning display of this editing result onto the color TFT liquid crystal 2. Displaying of the editing result on the color TFT liquid crystal is performed as follows: Operating of the software key board allows the microcomputer 73 to read the menu screen stored in the memory unit 77 and to display it on the color TFT liquid crystal 2 through the interface unit 91. By operating the mode selection switch 15f, various kinds of modes stored in the memory unit 76 are read out, and, as shown in FIG. 8, are displayed on the screen of the TFT liquid crystal 2. Of the various kinds of modes, "4. Displaying the editing result on the TFT liquid crystal" is designated, thereby making it possible to start it up.

Namely, when the displaying of the editing result on the color TFT liquid crystal is designated using means such as the software key board, the microcomputer 73 reads the partial picture (compression-encoded motion picture), which is photographed by the camera unit 3 and is then compression-encoded, from the multi-storied memory module 65 and transmits it to the expansion-decoding unit 81 through the bus line 87. The expansion-decoding unit 81 expands (decreasing the expansion rate) and decodes the received partial picture (compression-encoded motion picture) so that it is suited for the size of the set partial picture obtained from the control unit 75 in the microcomputer, and outputs the expansion-decoded partial picture to the frame memory so as to store it. Moreover, the microcomputer 73 reads the selected desired background picture (compression-encoded still picture) from the memory unit 77 and transmits it to the expansion-decoding unit 90 through the bus line 87. The expansion-decoding unit 90 decompresses and decodes the received desired background picture (compression-encoded still picture), and outputs the expansion-decoded background picture to the frame memory so as to store it. The picture synthesizing unit 82, based on the setting information obtained from the control unit 75 in the microcomputer 73 concerning the size and position of the partial picture towards the desired background picture, fits the expansion-decoded partial picture (motion picture), which is stored in the frame memory in the expansion-decoding unit 81, into the expansion-decoded background picture (still picture) stored in the frame memory in the expansion-decoding unit 90, and thus synthesizes both of the pictures, and outputs the synthesized picture to the frame memory so as to store it. Furthermore, the display picture signal generating unit 83 describes the synthesized picture stored in the frame memory by adding to it the character information or the graphics information, which is inserted into the background picture and is related with the title, a relation between the background picture and the partial picture and so on, and the time and date when the object was photographed by the camera unit 3. Then, the synthesized picture, after being converted into analog picture signals by the DAC, is transmitted to the gate-side driver LSI chips 42 and the drain-side driver LSI chips 43, thereby making it possible to display the motion picture photographed by the camera unit 3 in such a manner that it is, as a partial picture, fitted into the background picture edited on the screen of the color TFT liquid crystal 2. This, as illustrated in FIG. 9, allows the followings to be performed, thus making it possible to make the tour album: A motion picture photographed by the camera unit 3 is presented with a still picture, which is composed of a map of the destination of a tour or a tour guide thereto, as the background picture. Concerning the time and date when the object has been photographed or the destination of the tour where the object has been photographed, when the background picture is the map, they are pointed to with graphics such as an arrow. Character representation is performed regarding comments on a title, the destination of the tour, or the object to be photographed. Also, by selecting a title or a background which is suitable for a photograph collection, it is also possible to prepare a photograph collection (for example, a graduation commemoration album, an entrance commemoration album, a wedding commemoration album, and so on).

Also, regarding the compression-encoded voice stored in the multi-storied memory module 65, too, it is expanded and decoded in the expansion-decoding unit 81, converted into analog voice signals by the DAC 84, and amplified by the amplifier 85, thereby enabling the voice to be heard through the headphone 86.

Finally, the IC card lid 13 is opened and then the IC card 14 is mounted. Operating of the software key board allows the microcomputer 73 to read the menu screen stored in the memory unit 77 and to display it on the color TFT liquid crystal 2 through the interface unit 91. By operating the mode selection switch 15f, the various kinds of modes stored in the memory unit 76 are read out, and, as shown in FIG, 8, are displayed on the screen of the TFT liquid crystal 2. Of the various kinds of modes, "2. Writing into an IC card" is designated. This results in writing a portion of the picture information stored (recorded) in the multi-storied memory module 65. Actually, however, in order to write into the IC card 14 all of the picture information stored in the multi-storied memory module 65, several pieces of IC cards are needed. Thus, it turns out that the picture information stored in the multi-storied memory module 65 is partially written into the IC card 14. Thus, it becomes necessary to select picture information to be written into the IC card 14. Namely, the picture information stored in the multi-storied memory module 65, as described above, is displayed on the screen of the TFT liquid crystal 2, and, by operating the software key board while seeing this displayed picture information, the extent to be written into the IC card 14 is designated. This makes it possible to write into the IC card 14 desired picture information out of the picture information stored in the multi-storied memory module 65 by the microcomputer 73. Since the compression-encoded voice information is stored in the multi-storied memory module 65, it is also possible to write this voice information into the IC card 14. Incidentally, the IC card 14 is also constituted by arranging in parallel, for example, about 3 to 4 units of flash memory chips, one unit of which is obtained by stacking the flash memory chips in about 4 to 8 stages. Accordingly, the writing into IC card 14, as is the case with the writing into the multi-storied memory module 65, is allowed to be performed by designating the addresses in a state parallel or quasi-parallel to each flash memory chip, thereby making a high-speed writing possible.

Also, regarding the edited picture information stored in the multi-storied memory module 65, it is possible to reset the edition and to write into the IC card 14 only the motion picture which is photographed by the camera unit and is compression-encoded.

Also, as shown in FIG. 10, a personal computer 101, a workstation, a TV 102, a communication appliance 103 such as a PHS, cellular phones, and a printer are connected to the connector 71 which, as described earlier, is connected to the bus line 87 through the I/O control unit 72. This makes it possible to input the coded information such as characters, a synthesized sound and graphics and, of the natural information, a still picture, or makes it possible to directly output information such as the picture information stored in the multi-storied memory module 65.

Also, the constitution is presented such that the IC card 14 can be mounted on a simplified image database terminal 104 connected to the personal computer 101, the workstation, the TV 102 and the printer. Then, the IC card 14, which is mounted on the above-mentioned electronic camera with a liquid crystal display 1 and into which the picture information stored in the multi-storied memory module 65 is partially written, is mounted on the simplified image database terminal 104, thereby making it possible to output the picture information written in the IC card 14. Naturally, by writing voice information into the IC card 14, it is also possible to output the voice information to the personal computer 101, the workstation and the TV 102. The simplified image database terminal 104 may be constituted such that a hard disk or a DVD can be mounted thereon.

FIG. 11 and FIG. 12 show an embodiment in the case of mounting the electronic camera with a liquid crystal display 1 on an adapter 111 in which a battery with a large power capacity is built and on which, for example, devices such as a hard disk can be mounted. In this embodiment, it is assumed that the battery is connected to a power supply line of the electronic camera with a liquid crystal display 1 with the use of, for example, a connector. Also, it is assumed that information which is read out of the hard disk or information which should be written therein is connected to the connector 71 of the electronic camera with a liquid crystal display 1. Reference numeral 112 denotes a portion on which the devices such as the hard disk are mounted. Moreover, a rear surface of the adapter 111 is provided with a protruded portion 113 so that it is easy to hold with hands, and further a belt-shaped member 114, which feels good to the touch and is soft, is embedded therein.

As described above, the electronic camera with a liquid crystal display 1 is mounted on the adapter 111 in which a battery with a large power capacity is built and on which, for example, devices such as a hard disk can be mounted. This makes it possible to input the coded information recorded in the hard disk, such as characters, a synthesized sound and graphics and, a still picture among the natural information, and makes it possible to directly write into the hard disk information such as the picture information stored in the multi-storied memory module 65.

Also, the electronic camera with a liquid crystal display 1 is placed on a stand installed in a main entrance or a living room in a household and having a rechargeable battery, and terminals 121, 122 of the electronic camera with a liquid crystal display 1 are connected to a doorphone camera. This makes it possible to display a visitor on a screen of the TFT liquid crystal 2 without opening the door. A signal from a pushphone is fetched, and only when the pushphone is pushed, a picture photographed by the doorphone camera is fetched and caused to be stored into the multi-storied memory module 65, thereby making possible the use as an answering phone.

### Industrial Applicability

The present invention can exert an effect of embodying an electronic camera with a liquid crystal display, which is pocket-sized enough to be put into or out of a pocket, does not consume much power, is vibration-resistant, and, what is more, exhibits a high calculating ability and has a high-speed performance.

Also, the present invention can exert an effect of embodying an electronic camera with a liquid crystal display which is easy to put into or out of a pocket and is easy to hold with one hand.

Also, the present invention can exert an effect of embodying an electronic camera with a liquid crystal display which makes easy and possible an editing of a picture such as an insertion of a partial picture into a background picture.

## Claims

1. An electronic camera with a liquid crystal display, comprising:
a camera unit photographing an object to be photographed,
a circuit, said circuit including,
an ADC converting picture signals photographed in said camera unit into digital picture signals,
a compression-encoding unit compression-encoding the digital picture signals converted by said ADC,
a memory storing the picture signals compression-encoded in said compression-encoding unit,
an expansion-decoding unit expansion-decoding the compression-encoded picture signals stored in said memory,
a DAC converting the picture signals expansion-decoded by said expansion-decoding unit into analog signals, and
a microcomputer controlling said compression-encoding unit, storage into said memory and said expansion-decoding unit, and
a liquid crystal display unit for displaying the analog picture signals obtained from the DAC in said circuit, wherein, an IC card which is formed by arranging a plurality of multi-storied flash memories in parallel, is mountable on a rear surface side of the camera opposite to said liquid crystal display unit to store the picture signals compression-encoded by said compression-encoding unit in said circuit.

2. The electronic camera with a liquid crystal display as claimed in Claim 1, wherein said picture is a motion picture.

3. An electronic camera with a liquid crystal display, comprising:
a camera unit photographing an object to be photographed,
a circuit, said circuit including,
an ADC converting picture signals photographed by said camera unit into digital picture signals,
a compression-encoding unit compression-encoding the digital picture signals converted by said ADC,
a memory making the photographed picture signals, which are compression-encoded by said compression-encoding unit, correspond to compression-encoded background picture signals so as to store the photographed picture signals,
an expansion-decoding unit expansion-decoding the compression-encoded picture signals and the compression-encoded background picture signals stored in the memory,
a picture signal synthesizing unit synthesizing expansion-decoded partial picture signals towards the background picture signals expansion-decoded by said expansion-decoding unit,
a DAC converting the picture signals synthesized in said picture signal synthesizing unit into analog signals, and
a microcomputer which controls said compression-encoding unit, said expansion-decoding unit and said picture signal synthesizing unit, and edits and controls said compression-encoded photographed picture signals for making said photographed picture signals correspond to said compression-encoded background picture signals so as to store said photographed picture signals in the memory, and
a liquid crystal display unit displaying the analog picture signals obtained from the DAC in said circuit, wherein, an IC card which is formed by arranging a plurality of multi-storied flash memories in parallel, is mountable on a rear surface side of the camera opposite to the liquid crystal display unit to store the picture signals compression-encoded in said compression-encoding unit in said circuit.

4. The electronic camera with a liquid crystal display as claimed in Claim 3, wherein said background picture is a still picture and said partial picture is a motion picture.

5. The electronic camera with a liquid crystal display as claimed in Claim 1 or 3, wherein said camera unit is such that, on the left side when seen from a front surface side provided with said liquid crystal display unit, said camera unit is supported rotatably back and forth.

6. The electronic camera with a liquid crystal display as claimed in Claim 1 or 3, wherein the memory in said circuit is comprised of multi-storied memory module formed by arranging a plurality of multi-storied flash memories in parallel.

7. The electronic camera with a liquid crystal display as claimed in Claim 1 or 3, wherein a mode for causing said liquid crystal display unit to display said analog picture signals is performed using a software key board.

8. The electronic camera with a liquid crystal display as claimed in Claim 1 or 3, wherein said circuit is mounted on two sheets of substrates or one sheet of substrate.

9. An electronic camera with a liquid crystal display, having:
a main body casing,
a camera unit in which, on the left side when seen from a front surface side with reference to said main body casing, the camera unit is supported rotatably back and forth so as to photograph an object to be photographed,
a circuit built in said main body casing and including
an ADC converting picture signals photographed by said camera unit into digital picture signals,
a compression-encoding unit compression-encoding the digital picture signals converted by the ADC,
a memory storing the picture signals compression-encoded in said compression-encoding unit,
an expansion-decoding unit for expansion-decoding the compression-encoded picture signals stored in said memory,
a DAC converting the picture signals expansion-decoded in said expansion-decoding unit into analog signals, and
a microcomputer controlling said compression-encoding unit, storage into said memory and said expansion-decoding unit, and
a liquid crystal display unit built on a front surface side with reference to said main body casing so as to display the analog picture signals obtained from the DAC in said circuit, wherein, an IC card which is formed by arranging a plurality of multi-storied flash memories in parallel, is mountable on a rear surface side of the camera which is opposite to said liquid crystal display unit with reference to said main body casing to store the picture signals compression-encoded in the compression-encoding unit in said circuit.

10. An electronic camera with a liquid crystal display, comprising:
a main body casing,
a camera unit in which on the left side when seen from a front surface side with reference to said main body casing, the camera unit is supported rotatably back and forth so as to photograph an object to be photographed,
a circuit, said circuit including,
an ADC converting picture signals photographed in said camera unit into digital picture signals,
a compression-encoding unit compression-encoding the digital picture signals converted by the ADC,
a memory making the photographed picture signals which are compression-encoded in said compression-encoding unit, correspond to compression-encoded background picture signals so as to store the photographed picture signals,
an expansion-decoding unit expansion-decoding the compression-encoded picture signals and the compression-encoded background picture signals stored in said memory,
a picture signal synthesizing unit synthesizing expansion-decoded partial picture signals towards the background picture signals expansion-decoded in said expansion-decoding unit,
a DAC converting the picture signals synthesized in said picture signal synthesizing unit into analog signals, and
a microcomputer which controls said compression-encoding unit, said expansion-decoding unit and said picture signal synthesizing unit, and edits and controls said compression-encoded photographed picture signals to make said photographed picture signals correspond to said compression-encoded background picture signals so as to store said photographed picture signals in said memory, and
a liquid crystal display unit built on a front surface side with reference to said main body casing so as to display the analog picture signals obtained from the DAC in said circuit, wherein an IC card which is formed by arranging a plurality of multi-storied flash memories in parallel is mountable on a rear surface side of the camera which is opposite to said liquid crystal display unit with reference to said main body casing to store the picture signals compression-encoded in the compression-encoding unit in said circuit.

11. The electronic camera with a liquid crystal display as claimed in Claim 9 or 10, wherein a rear surface of said main body casing is formed in a waveform configuration in right and left directions.

12. The electronic camera with a liquid crystal display as claimed in Claim 9 or 10, wherein a slide lens cap for protecting a lens in the camera unit is provided on an upper surface of said main body casing.

13. The electronic camera with a liquid crystal display as claimed in Claim 9 or 10, wherein a power supply switch, a camera-recording button and a voice-recording switch are provided on the upper surface of said main body casing.

14. The electronic camera with a liquid crystal display as claimed in Claim 9 or 10, wherein said circuit is built in two sheets of substrates or one sheet of substrate.

15. The electronic camera with a liquid crystal display as claimed in Claim 9 or 10, wherein said IC card is mountable from an upper surface side of said main body casing.

16. The electronic camera with a liquid crystal display as claimed in Claim 9 or 10, wherein said display unit is 3.2 to 4 inches in size.

17. An electronic camera with a liquid crystal display, wherein a background picture and a partial picture are differentiated from each other so as to be stored in a memory, and, using the background picture and the partial picture stored in said memory, an output is performed with said partial picture integrated into or onto said background picture.
